# EUROPEAN PATENT APPLICATION

(11) **EP 4 603 968 A1**
(43) Date of publication of application: **20.08.2025**
(21) Application number: 24157624.8
(22) Date of filing: 14.02.2024
(51) Int. Cl.: G06F 8/656, G06F 8/71

(54) **A METHOD FOR UPGRADING A SOFTWARE COMPONENT OF A SYSTEM BY AN ELECTRONIC COMPUTING DEVICE, A COMPUTER PROGRAM PRODUCT, A COMPUTER-READABLE STORAGE MEDIUM, AS WELL AS AN ELECTRONIC COMPUTING DEVICE**

(71) Applicant: Siemens Aktiengesellschaft, 80333 München (DE)
(72) Inventor: Gruner, Tobias, 81675 München (DE); Müller, Harald, 82229 Seefeld-Hechendorf (DE); Stückjürgen, Christoph, 80807 München (DE); Zeitler, Daniel, 91281 Kirchenthumbach (DE)
(74) Representative: Siemens Patent Attorneys

(57) **Abstract**

The invention relates to a method for upgrading a software component (12) of a system (14) by an electronic computing device (10), comprising the steps of providing a first software version (16) of the software component (12), wherein the first software version (16) is to be upgraded, providing a second software version (18) for the software component (12), wherein the second software version (18) is the upgraded version of the first software version (16), providing an upgrade coordinator module (20) of the electronic computing device (10) for the system (14), wherein the upgrade coordinator module (20) provides a handover protocol (22) for switching from the first software version (16) to the second software version (18), and upgrading the software component (12) by coordinating the switching from the first software version (16) to the second software version (18) depending on the handover protocol (22) by the upgrade coordinator module (20). Furthermore, the present invention relates to a computer program product, a computer-readable storage medium as well as to an electronic computing device (10).

## Description

The present invention relates to a method for upgrading a software component of a system by an electronic computing device according to the pending claim 1. Furthermore, the present invention relates to a computer program product, a computer-readable storage medium, as well as to an electronic computing device.

In particular, from the state of the art modular systems, which may consist of software services, for example control functions, are already known. Each service operates in an environment which consists of inputs, outputs, and other services. Seamless upgrade is a pattern which allows to wave switch between different versions of services in such a context. The switch between the service versions happens seamlessly, for example without any glitches of moving parts or impact on the overarching automation process or business logic.

To achieve that, currently it is necessary for developers of such a service to implement "handover hooks". These handover hooks are part of the service, and they are executed when one version prepares to release control, the so-called release control hook, and when the other version prepares to accept control, a so-called accept control hook.

This means that handover hooks according to the state of the art and parameters always must be part of the service itself, in particular as part of the source code, and furthermore need to be deployed with the service, even if the handover hooks did not change.

The way of how those handover hooks are provided is not standardized and up to the developers of a service. This leads to unnecessary implementation overhead and lack of transparency of handover hooks.

Coming from another perspective, each software component, like a service function, can be treated as asset. There are several approaches that try to describe assets in a standardized way. The process, how an asset can be seamlessly upgraded can also be interpreted as a specific aspect of the according asset. However, currently, there is no way to combine both, the seamless upgrade functionality and the standardized asset description.

The seamless upgrade pattern defines an upgrade mechanism, which distinguishes the normal operation phase of a service from upgrade operation phases: "accept-control" and "release-control". Once an upgrade is triggered, the previous version enters the release-control phase. Within this phase, the previous version of a service can bring itself into a state that allows a seamless handover of control. After the previous version has completed the release-control phase, the upgrade mechanism hands over environment control to the next version. Before entering normal operation, the next version starts in the accept-control-phase that allows preparation for normal operation.

The underlying functionality of "accept-control" and "release control" is part of a service itself. It is totally up to developer to provide that functionality. The upgrade process is described as source code as part of the business logic of the according service.

This offers a lot of flexibility to the developer but also brings a lot of disadvantages, as already described.

It is an object of the present invention to provide a method, a computer program product, a computer-readable storage medium as well as an electronic computing device, by which an efficient way for upgrading a software version of a system can be provided.

This object is solved by a method, a computer program product, a computer-readable storage medium, as well as an electronic computing device according to the independent claims. Advantageous embodiments are presented in the dependent claims.

One aspect of the invention relates to a method for upgrading a software component of a system by an electronic computing device. A first software version of the software component is provided, wherein the first software version is to be upgraded. A second software version for the software component is provided, wherein the second software version is the upgraded version of the first software version. An upgrade coordinator module of the electronic computing device for the system is provided, wherein the upgrade coordinator module provides a handover protocol for switching from the first software version to the second software version. The software component is upgraded by coordinating the switching from the first software version to the second software version depending on the handover protocol by the upgrade coordinator module.

Therefore, a developer of a service does not need to deal with upgrade procedures inside his own business logic to guarantee seamless upgrades.

Instead, upgrade routines of a service can be defined in a standardized way at a single point, for example the asset administration shell of the according asset, stored in a central asset repository, without the need to provide such information inside the application or service itself.

In other words, the invention moves the upgrade logic from the business logic of a service to a new system component, in particular the upgrade coordinator module that may execute handover hooks that have been provided in a standardized way. For instance, the upgrade procedure can be provided as a code inside a standardized seamless upgrade service meta model. An upgrade coordinator component may take this upgrade logic and execute it in its sandbox environment.

Therefore, an upgrade of the software component can be provided in an efficient way. In particular, unnecessary implementation overhead and a lack of transparency of handover hooks can be solved.

According to an embodiment, the upgrade coordinator module is provided as a centralized module for the first software version and the second software version. Therefore, just one module is provided for coordinating the upgrade of the software version from the first software version to the second software version. In other words, the upgrade coordinator module is a so-called centralized upgrade coordinator module.

In another embodiment, the upgrade coordinator module comprises a first coordinator element, which is provided as a first sidecar of the first software version, and a second coordinator element, which is provided as a second sidecar of the second software version. In other words, each software version comprises a coordinator element of the upgrade coordinator module. Therefore, a sidecar container in a service mesh is provided.

In another embodiment, the first coordinator element and the second coordinator element are connected to each other for coordinating the handover protocol. In particular, the first coordinator element and the second coordinator element are communicating with each other, for example they are exchanging messages, for example, the accept-control message and the release-control message. Therefore, an efficient way for upgrading the software version is provided.

In another embodiment, a service meta model module is provided, which is connected to the upgrade coordinator module, and wherein an upgrade logic for upgrading the system is provided by the service meta model module. In particular, all necessary information that is needed to perform the seamless upgrade as an aspect of the service meta module is provided by the service meta model module. In particular, the service meta model module can be provided as a submodule of an asset administration shell, in particular for describing any kind of assets, for example software and hardware assets and hierarchies of both. This information can then be used by the upgrade coordinator module mentioned above to execute the actual upgrade routine.

According to another embodiment, a point in time for upgrading the software component is provided by the service meta model module. In particular, therefore, a synchronized upgrading from the first software version to the second software version can be provided by using the information of the service meta model module. In particular, the service meta model module further comprises at least software specifically and/or service specifically information about the upgrade.

In another embodiment, each coordinator element is communicating with the service meta model module. Therefore, each coordinator element can be using the information from the service meta model module in order to provide an efficient way for upgrading the software version.

In another embodiment, the handover protocol is coded in a WebAssembly code. This has the advantage that an open standard can be used. Therefore, the transparency for the seamless upgrade can be raised.

In another embodiment, after the upgrade the second software version is activated. In particular, after the second software version is successfully installed, the second software version is activated, and therefore can, for example, control functionalities of the system. In particular, the software component can then generate control signals for controlling the system.

In another embodiment, after the upgrade the first software version is deactivated. Therefore, the first software version is inactive and is not longer authorized to generate control signals for the system.

In another embodiment, at least the second software version is provided just as a business logic code. Therefore, the second software version just comprises the business logic, in particular without the handover hook protocol code. Therefore, a developer of the software version can concentrate on developing the business code.

In another embodiment, the upgrade of the software is provided as a seamless upgrade. In particular, a seamless upgrade is a pattern which allows to switch between different versions of services in such a context. The switch between service versions happens seamlessly, in particular without any glitches of moving parts or impact on the overarching automation process or business logic. Therefore, an efficient way for upgrading the software version is provided.

In particular, the present invention is a computer-implemented method. Therefore, another aspect of the invention relates to a computer program product comprising program code means for performing a method according to the preceding aspect.

A still further aspect of the invention relates to a computer-readable storage medium comprising at least the computer program product according to the preceding aspect.

Furthermore, the present invention relates to an electronic computing device for upgrading a software component of a system, comprising at least one upgrade coordinator module, wherein the electronic computing device is configured for performing a method according to preceding aspect. In particular, the method is performed by the electronic computing device.

Advantageous embodiments of the method are to be regarded as advantageous embodiments of the computer program product, the computer-readable storage medium, as well the electronic computing device. The electronic computing device therefore comprises means for performing the method.

Here and in the following, a module can be understood as a hardware module or as a software module. In particular, a module may also comprise a hardware and a software portion implemented on the hardware.

A software module may be understood as a portion of software code functionally connected and combined to a unit. A software module may comprise or implement several processing steps and/or data structures. A method step of providing a software module may be understood to comprise providing a respective software code in a computer readable fashion on a computer readable storage medium.

A computing unit/electronic computing device may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

For use cases or use situations which may arise in a method according to the invention and which are not explicitly described herein, it may be provided that, in accordance with the method, an error message and/or a prompt for user feedback is output and/or a default setting and/or a predetermined initial state is set.

Independent of the grammatical term usage, individuals with male, female or other gender identities are included within the term.

Further features and feature combinations of the invention are obtained from the figures and their description as well as the claims. In particular, further implementations of the invention may not necessarily contain all features of one of the claims. Further implementations of the invention may comprise features or combinations of features, which are not recited in the claims.

Therefore, the figures show in:
- FIG 1: a schematic block diagram according to an embodiment of an electronic computing device for performing a method according to an embodiment of the invention; and
- FIG 2: another schematic block diagram according to an embodiment of an electronic computing device for performing an embodiment of a method of the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

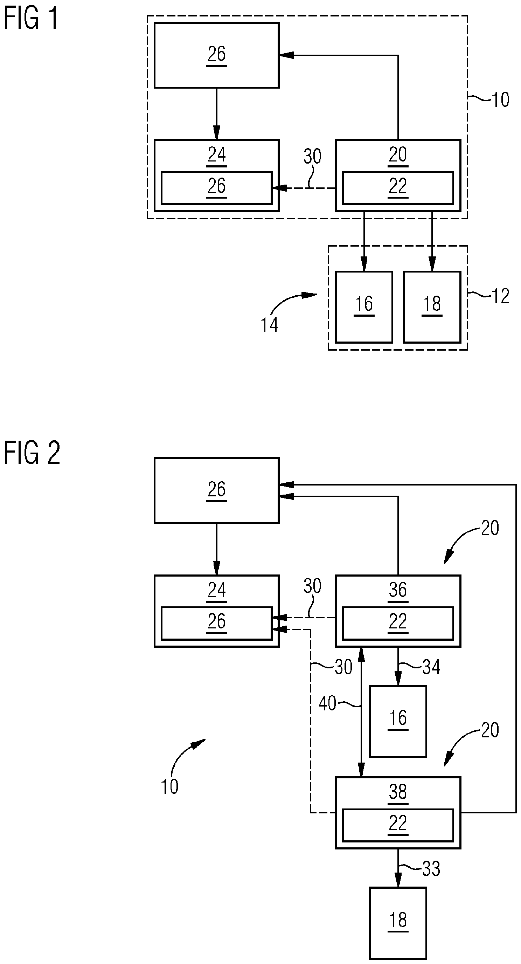

FIG 1 shows a schematic block diagram according to an embodiment of an electronic computing device 10. The electronic computing device 10 is configured for upgrading a software component 12 of a system 14.

Therefore, the electronic computing device 10 is configured for upgrading the system 14.

Therefore, a first software version 16 for the software component 12 is provided, wherein the first software version 16 is to be upgraded. A second software version 18 for the software component 12 is provided, wherein the second software version 18 is the upgraded version of the first software version 16. An upgrade coordinator module 20 of the electronic computing device 10 is provided, wherein the upgrade coordinator module 20 provides a handover protocol 22, which may be configured in a so-called upgrade logic runtime, for switching from the first software version 16 to the second software version 18. The software component 12 is upgraded by coordinating the switching from the first software version 16 to the second software version 18 depending on the handover protocol 22 by the upgrade coordinator module 20.

FIG 1 further shows that the electronic computing device 10 may comprise a service meta model module 24 as well as an asset repository 26. The asset repository 26 may contain the software meta model module 24. Furthermore, the service meta model module 24 may comprise an aspect of containing upgrade information 28. Furthermore, the upgrade coordinator module 20 may query the asset repository 26.

Furthermore, FIG 1 shows that the upgrade coordinator module 20 is provided as a centralized module for the first software version 16 and the second software version 18. The service meta model module 24 may be connected to the upgrade coordinator module 20, and wherein an upgrade logic 30 for upgrading the system 14 is provided by the service meta model module 24. In particular, for example, a point in time for upgrading the software component 12 is provided by the service meta model module 24.

Furthermore, the handover protocol 22 may be coded in a Web Assembly code.

Furthermore, FIG 1 shows that after the upgrade the second software version 18 is activated which is shown with a first arrow 32. After the upgrade, the first software version 16 is deactivated, which is shown with a second arrow 34.

Furthermore, at least the second software version 18 is provided just as a business logic code. Furthermore, the upgrade of the software component 12 is provided as a seamless upgrade.

In particular, FIG 1 shows that the upgrade logic 30 is separated from the business logic of a service/software to the new upgrade coordinator module 20. The upgrade coordinator module 20 may execute handover hooks that have been provided in a standardized way. For instance, the upgrade procedure can be provided as a WebAssembly code inside the standardized seamless upgrade service meta model module 24. An upgrade coordinator component may take this upgrade logic 30 and execute it in its sandbox environment. The upgrade coordinator can be provided as shown in FIG 1, as a centralized system component.

Furthermore, the service meta model module 24 is provided, which provides all necessary information that is needed to perform the seamless upgrade, for example, it may be provided as a submodule of an asset administration shell for describing any kinds of assets, for example software and hardware assets and hierarchies of both. This information can then be used by the upgrade coordinator module 20 to execute the actual upgrade routine.

FIG 2 shows another embodiment according to an electronic computing device 10. In particular, as shown in FIG 2, the upgrade coordinator module 20 may comprise a first coordinator element 36, which is provided as a second side car of the first software version 16, and a second coordinator element 38, which is provided as a second side car of the second software version 18. In particular, the first coordinator element 36 and the second coordinator element 38 are connected to each other for coordinating the handover protocol 22, which is shown with a third arrow 40. Furthermore, it is shown that each coordinator element 36, 38 is communicating with the service meta model module 24.

Therefore, FIG 2 shows another embodiment of the electronic computing device 10 wherein the upgrade coordinator module 20 is configured as a service mesh.

## Claims

1. A method for upgrading a software component (12) of a system (14) by an electronic computing device (10), comprising the steps of:
- providing a first software version (16) of the software component (12), wherein the first software version (16) is to be upgraded;
- providing a second software version (18) for the software component (12), wherein the second software version (18) is the upgraded version of the first software version (16);
- providing an upgrade coordinator module (20) of the electronic computing device (10) for the system (14), wherein the upgrade coordinator module (20) provides a handover protocol (22) for switching from the first software version (16) to the second software version (18); and
- upgrading the software component (12) by coordinating the switching from the first software version (16) to the second software version (18) depending on the handover protocol (22) by the upgrade coordinator module (20).

2. A method according to claim 1, **characterized in that**
the upgrade coordinator module (20) is provided as a centralized module for the first software version (16) and the second software version (18).

3. A method according to claim 1, **characterized in that**
the upgrade coordinator module (20) comprises a first coordinator element (36), which is provided as a first sidecar of the first software version (16), and a second coordinator element (38), which is provided as a second sidecar of the second software version (18).

4. A method according claim 3, **characterized in that**
the first coordinator element (36) and the second coordinator element (38) are connected to each other for coordinating the handover protocol (22).

5. A method according to any one of claims 1 to 4, **characterized in that**
a service meta model module (24) is provided, which is connected to the upgrade coordinator module (20), and wherein an upgrade logic (30) for upgrading the system (14) is provided by the service meta model module (24).

6. A method according claim 5, **characterized in that**
a point in time for upgrading the software component (12) is provided by the service meta model module (24).

7. A method according to claim 3 or 4 and 5 or 6, **characterized in that**
each coordinator element (36, 38) is communicating with the service meta model module (24).

8. A method according to any one of claims 1 to 7, **characterized in that** the handover protocol (22) is coded in a Web Assembly code.

9. A method according to any one of claims 1 to 8, **characterized in that** after the upgrade the second software version (18) is activated.

10. A method according to any one of claims 1 to 9, **characterized in that** after the upgrade the first software version (16) is deactivated.

11. A method according to any one of claims 1 to 10, **characterized in that** at least the second software version (18) is provided just as a business logic code.

12. A method according to any one of claims 1 to 11, **characterized in that** the upgrade of the software component (12) is provided as a seamless upgrade.

13. A computer program product comprising program code means for performing a method according to any one of claims 1 to 12.

14. A computer-readable storage medium comprising at least the computer program product according to claim 13.

15. An electronic computing device (10) for upgrading a software component (12) of a system (14), comprising at least one upgrade coordinator module (20), wherein the electronic computing device (10) is configured for performing a method according to any one of clams 1 to 12.
